# EUROPEAN PATENT APPLICATION

(11) **EP 4 646 015 A2**
(43) Date of publication of application: **05.11.2025**
(21) Application number: 25202891.5
(22) Date of filing: 15.11.2019
(51) Int. Cl.: H04W 76/15

(54) **UPLINK COMMUNICATION IN AN INACTIVE STATE IN A CELLULAR NETWORK**

(30) Priority: 16.11.2018 US 201862768507 P
(62) Divisional of application: 19817526.7
(71) Applicant: GOOGLE LLC, Mountain View CA 94043 (US)
(72) Inventor: WU, Chih-Hsiang, Mountain View, 94043 (US); CHOU, Kao-Peng, Mountain View, 94043 (US)
(74) Representative: Marks & Clerk GST

(57) **Abstract**

To reduce latency in uplink communication, a user device transmits first application data in an uplink direction, while the UE is in a connected state associated with a protocol for controlling radio resources (1602), transitioning, in response to a certain period of application data inactivity, to an inactive state associated with the protocol (1604), determining a channel configuration for uplink communication when the user device is in the inactive state (1606), and transmitting, by the processing hardware, further application data in the uplink direction to a base station in accordance with the determined channel configuration (1608) when the user device is in the inactive state, prior to transmitting a request to transition to the connected state and subsequently to completing a procedure for synchronizing the radio link between the user device and the base station.

## Description

### FIELD OF THE DISCLOSURE

This disclosure relates to cellular communications and, more particularly, to configuring uplink transmissions in a user device operating in a certain state.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

The 4G-LTE Radio Resource Control (RRC) protocol specified an RRC_IDLE state, in which a user device (commonly referred to as user equipment, or UE) did not have an active radio connection with a base station, and an RRC_CONNECTED state, in which the UE had an active radio connection with the base station. The 5G protocol introduced an intermediate state, RRC_INACTIVE, to allow a UE to more quickly transition back to the RRC_CONNECTED state due to Radio Access Network (RAN)-level base station coordination and RAN-paging procedures. When the UE is in the RRC_INACTIVE state, the UE must transition to the RRC_CONNECTED state in order to start transmitting data in the uplink direction. To this end, the UE must perform the RRC resume procedure, which requires the UE to send a *RRCResumeRequest* message to the base station, receive a *RRCResume* command in response from the base station, and transmit a *RRCResumeComplete* message to the base station to confirm that the state transition is complete. Sending the *RRCResumeRequest* message in turn requires that the UE first perform a random access procedure (by transmitting a random access preamble to the base station and receiving a random access response) or otherwise synchronize the radio link between the UE and the base station.

### SUMMARY

Generally speaking, a UE of this disclosure reduces latency in uplink transmission of application data in a certain state associated with a protocol for controlling radio resources between the UE and a base station. As used herein, the term "application data" refers to data from protocol layers above the layer of the protocol for controlling radio resources (e.g., RRC). Application data can include for example Internet traffic data or voice/video call data. The UE can exchange application data with the base station in the first state and transition to the certain (second) state due to a period of data transmission inactivity. When new application data is available for uplink transmission in the second state, the UE omits a procedure for synchronizing the radio link between the UE and a base station, a procedure for transitioning the UE back to the first state, or both.

The base station can provide the UE with channel configuration for uplink communication, which can include an indication of what procedures the base station supports when the UE is in the second state. In various implementations of these techniques, the base station notifies the UE when releasing a radio connection (e.g., via an *RRCRelease* message), when reconfiguring radio resources (e.g., via an *RRCReconfiguration* message), or when providing information about a cell which the UE recently selected. In the third case, the UE can transition from the first state to the second state after exchanging application data with a first base station, select a new cell of a second base station, and receive the information about the new cell from (e.g., via a *SystemInformationBlock* element) from the second base station.

To omit the procedure for synchronizing the radio link between the UE and a base station, the UE in some cases receives, as a part of channel configuration for uplink communication, a Non-Orthogonal Multiple Access (NOMA) configuration, which can include a configured grant. The UE then can use this NOMA configuration to access the radio channel and proceed directly to transmitting application data or, in some cases, a message for resuming an RRC connection. In another case, the UE receives an uplink grant on a Physical Downlink Control Channel (PDCCH) and uses this uplink grant to transmit a *RRCResumeRequest* message.

A base station can receive the NOMA configuration or, more broadly, channel access data that allows the UE to skip the procedure for synchronizing the radio link, from another base station or a core network or an Operations and Maintenance (O&M) server. In another implementation, the base station can be pre-configured with this information.

One example embodiment of these techniques is a method in a user device for uplink communication. The method can be executed by processing hardware of the user device and includes transmitting first application data in an uplink direction, while the UE is in a first state associated with a protocol for controlling radio resources; transitioning, in response to a certain period of application data inactivity, to a second state associated with the protocol; determining a channel configuration for uplink communication when the user device is in the second state; and transmitting further application data in the uplink direction to a base station in accordance with the determined channel configuration.

Another example embodiment of these techniques is a non-transitory medium storing instructions that, when executed by processing hardware of a user device, cause the user device to perform a method for uplink communication described above.

Yet another embodiment of these techniques is a method in a base station for reducing latency in uplink communication. The method can be executed by processing hardware of the base station and includes determining channel configuration for uplink communication from a user device that has transitioned from a first state, in which the user device transmitted first application data to the base station, to a second state in response to a certain period of application data inactivity, the first state and second states associated with a protocol for controlling radio resources; transmitting, to the user device, the channel configuration for uplink communication from the user device; and receiving further application data transmitted from the user device in accordance with the channel configuration.

Another example embodiment of these techniques is a non-transitory medium storing instructions that, when executed by processing hardware of a base station, cause the base station to perform a method for uplink communication above.

### BRIEF DESCRIPTION OF THE DRAWINGS

Fig. 1 is a block diagram of an example wireless communication network in which a user device and a base station of this disclosure can implement the techniques of this disclosure for reducing latency in uplink transmissions.
Fig. 2 illustrates example processing hardware of the user device of Fig. 1.
Figs. 3-15 illustrate several example scenarios and methods in one or several components illustrated in Fig. 1, in particular:

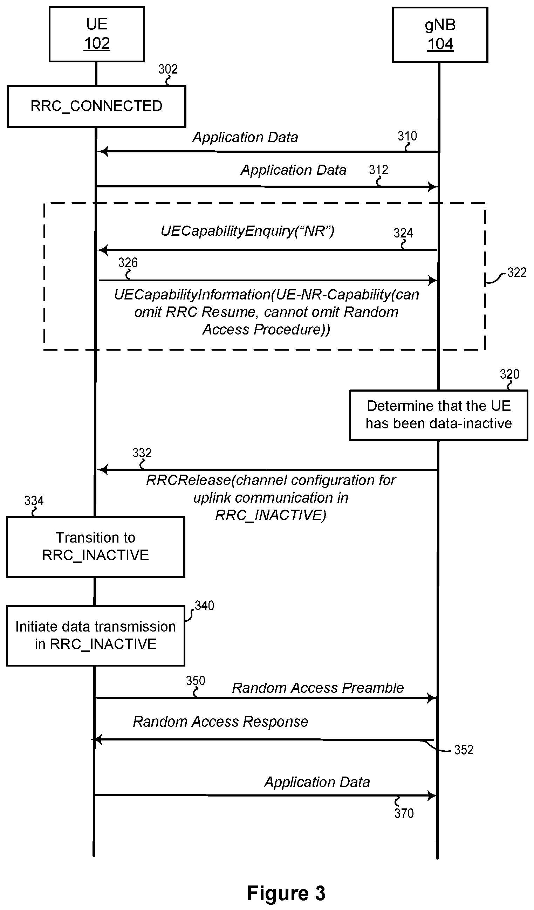

   Fig. 3 is a messaging diagram of an example scenario in which the user device receives channel configuration for uplink transmission in a command to release a radio connection and subsequently transmits uplink application data in the RRC_INACTIVE state in accordance with the received channel configuration;

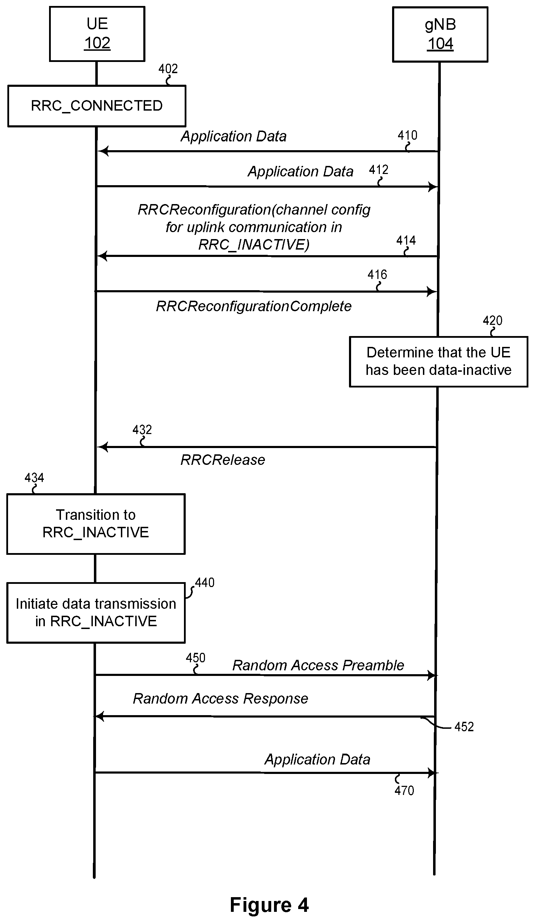

   Fig. 4 is a messaging diagram of an example scenario in which the user device receives channel configuration for uplink transmission in a command to reconfigure a radio connection and subsequently uplink application data in the RRC_INACTIVE state in accordance with the received channel configuration;

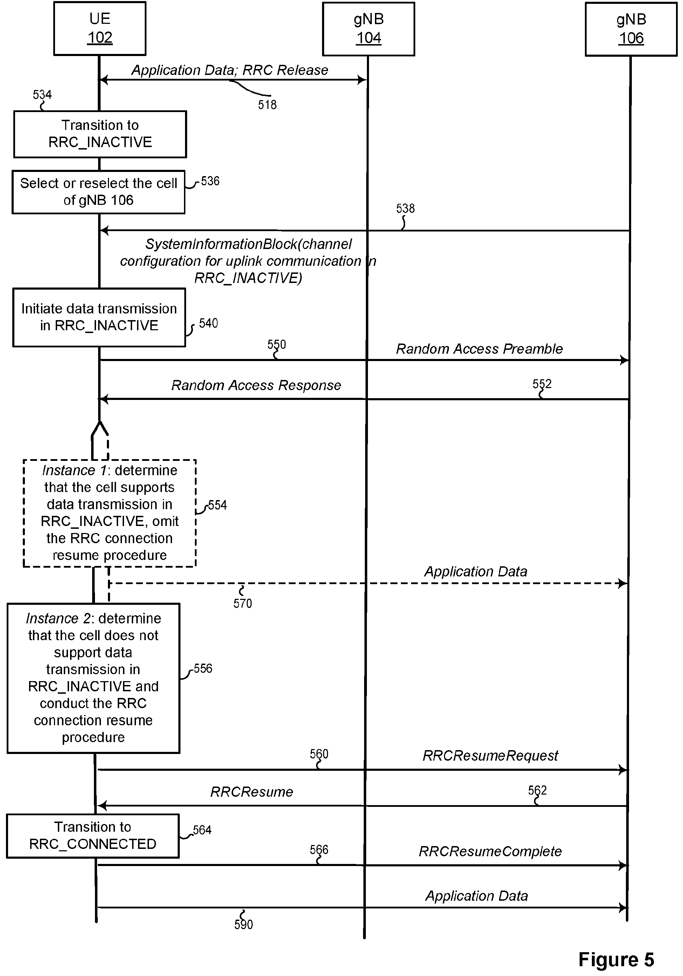

   Fig. 5 is a messaging diagram of an example scenario in which the user device receives channel configuration for uplink transmission in a system information block for a newly selected or reselected cell and transmits uplink application data in the RRC_INACTIVE state in accordance with the received channel configuration;

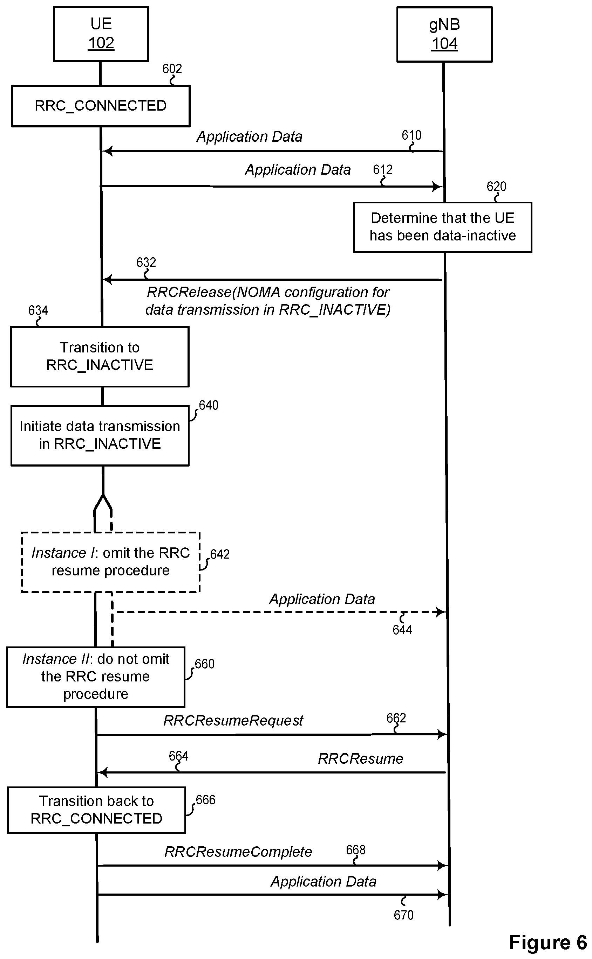

   Fig. 6 is a messaging diagram of an example scenario in which the user device receives channel configuration for uplink transmission, including Non-Orthogonal Multiple Access (NOMA) configuration, in a command to release a radio connection and subsequently transmits uplink application data in the RRC_INACTIVE state or initiates the procedure for resuming the radio connection, state in accordance with the received channel configuration;

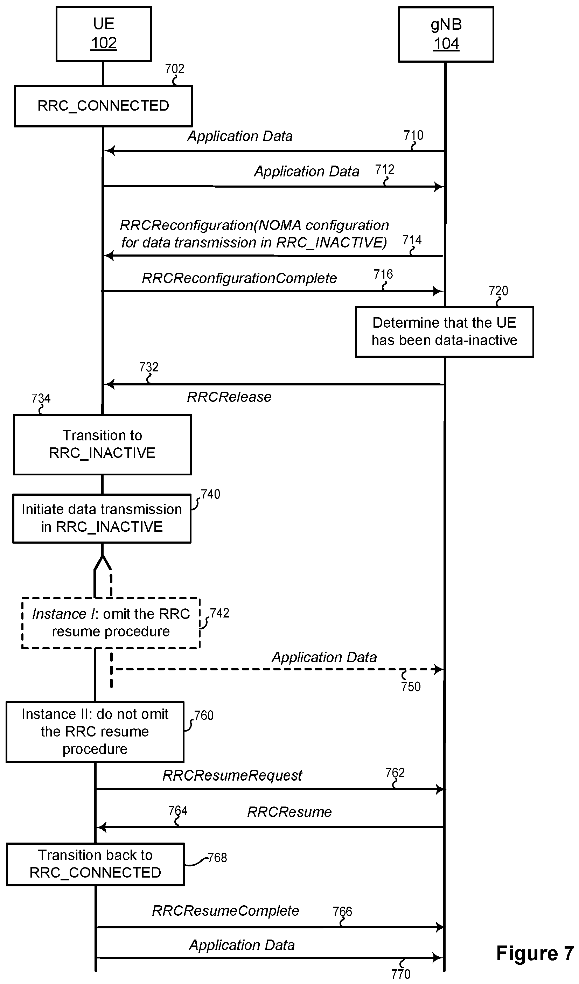

   Fig. 7 is a messaging diagram of an example scenario in which the user device receives channel configuration for uplink transmission, including NOMA configuration, in a command to reconfigure a radio connection and subsequently transmits uplink application data in the RRC_INACTIVE state or initiates the procedure for resuming the radio connection, state in accordance with the received channel configuration;

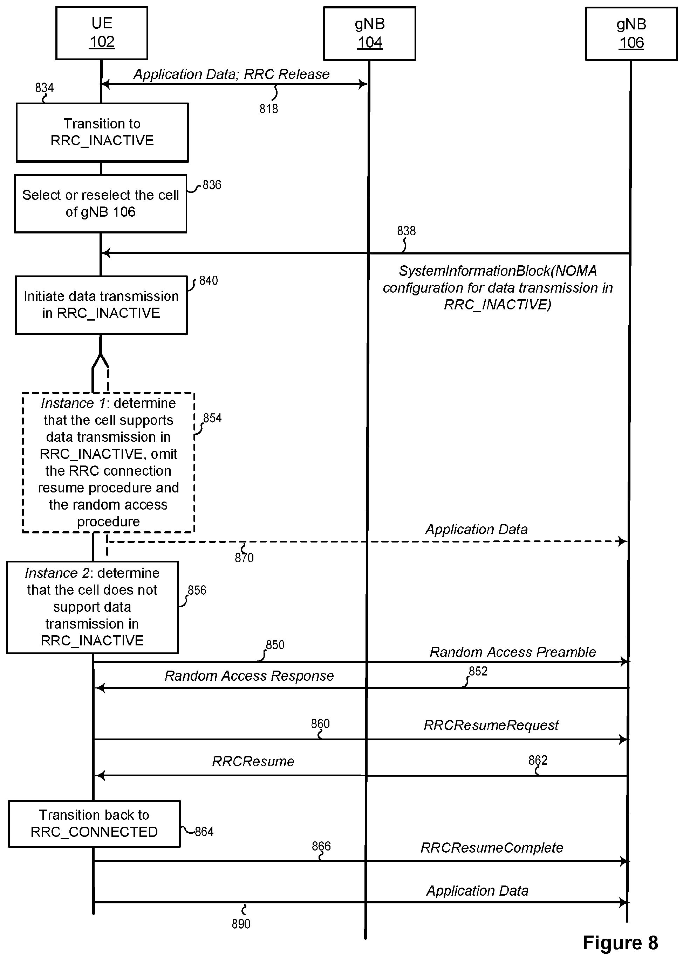

   Fig. 8 is a messaging diagram of an example scenario in which the user device receives channel configuration for uplink transmission, including NOMA configuration, in a system information block for a newly selected or reselected cell, omits a procedure for synchronizing a radio link, and transmits uplink application data in the RRC_INACTIVE state in accordance with the received channel configuration;

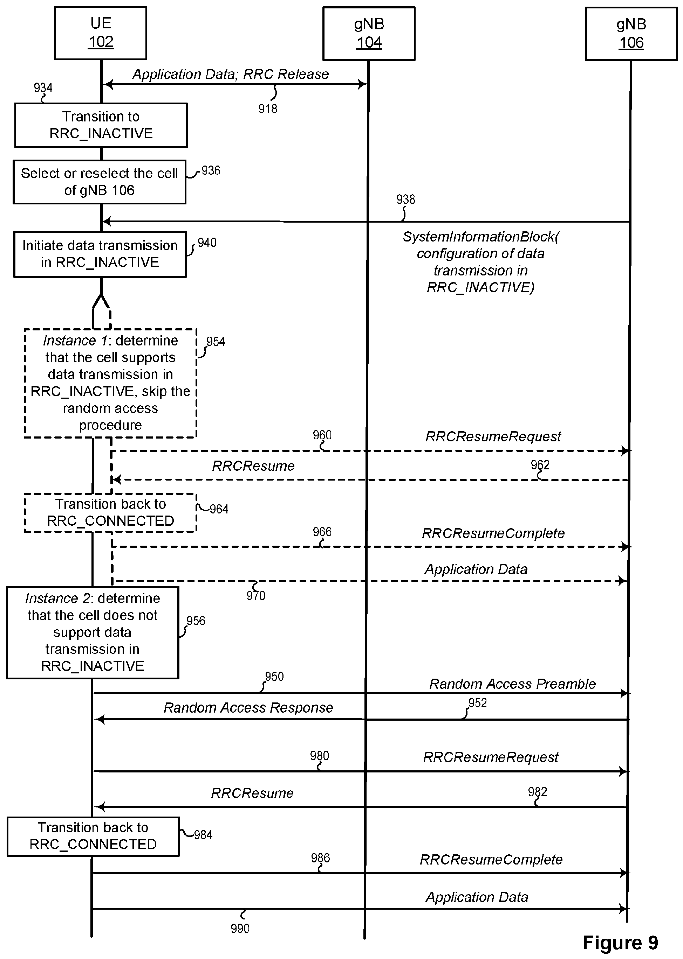

   Fig. 9 is a messaging diagram of an example scenario in which the user device receives channel configuration for uplink transmission, including NOMA configuration, in a system information block for a newly selected or reselected cell and initiates the procedure for resuming the radio connection in accordance with the received channel configuration;

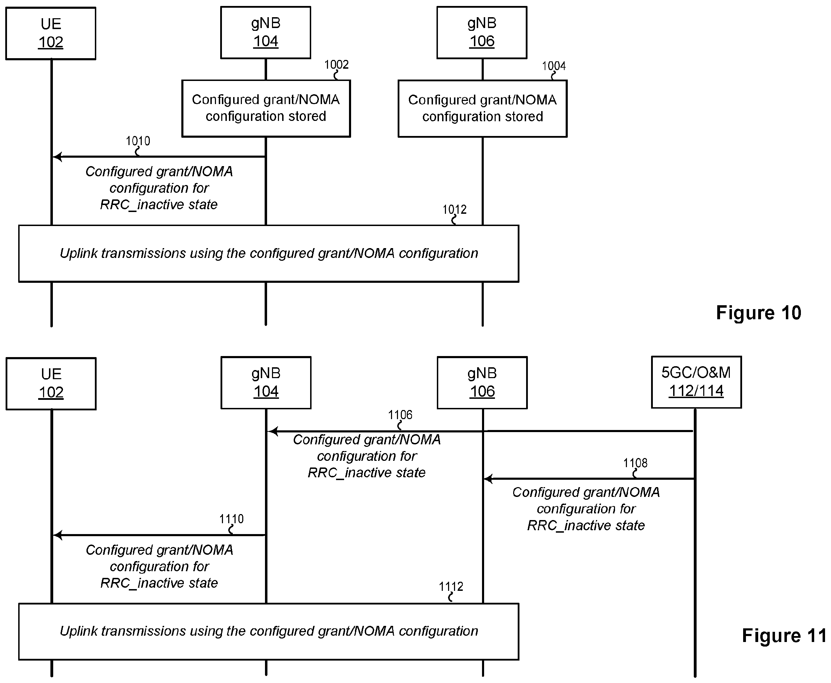

   Fig. 10 is a messaging diagram of an example scenario in which the first base station transmits NOMA configuration to the user device that subsequently uses the NOMA configuration in uplink communication with the second base station also storing this NOMA configuration;
   Fig. 11 is a messaging diagram of an example scenario in which the first base station and the second base station receive NOMA configuration from an Operations and Maintenance (O&M) server, and the first base station transmits the NOMA configuration to the user device;

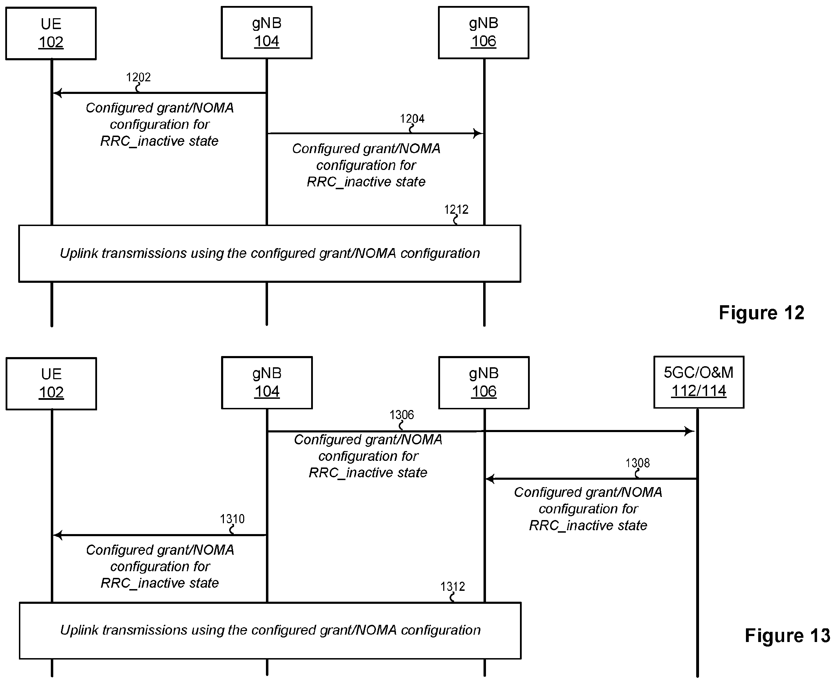

   Fig. 12 is a messaging diagram of an example scenario in which the first base station transmits NOMA configuration to the user device as well as to the second base station;
   Fig. 13 is a messaging diagram of an example scenario in which the first base station transmits NOMA configuration to the user device as well as to the O&M server, which in turn transmits the NOMA configuration to the second base station;

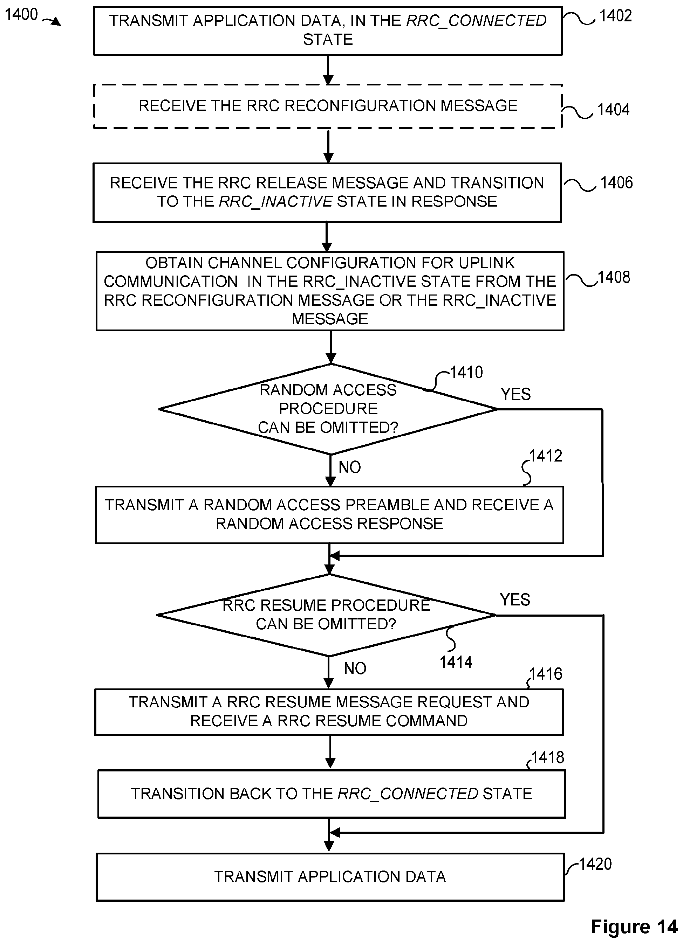

   Fig. 14 is a flow diagram of an example method in the user device for determining channel configuration for uplink communication and using the channel configuration to omit a procedure for synchronizing a radio link between the user device and the base station, a procedure for resuming the radio connection, or both; and

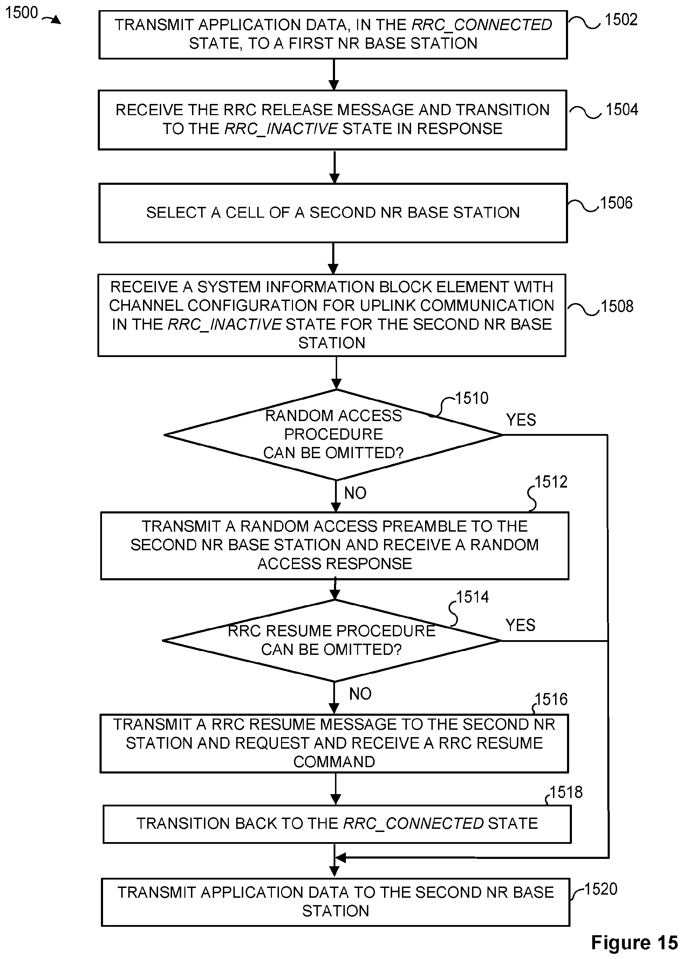

   Fig. 15 is a flow diagram of an example method in the user device for receiving channel configuration for uplink communication from a first base station and using the channel configuration to omit a procedure for synchronizing a radio link between the user device and the second base station, a procedure for resuming the radio connection, or both.

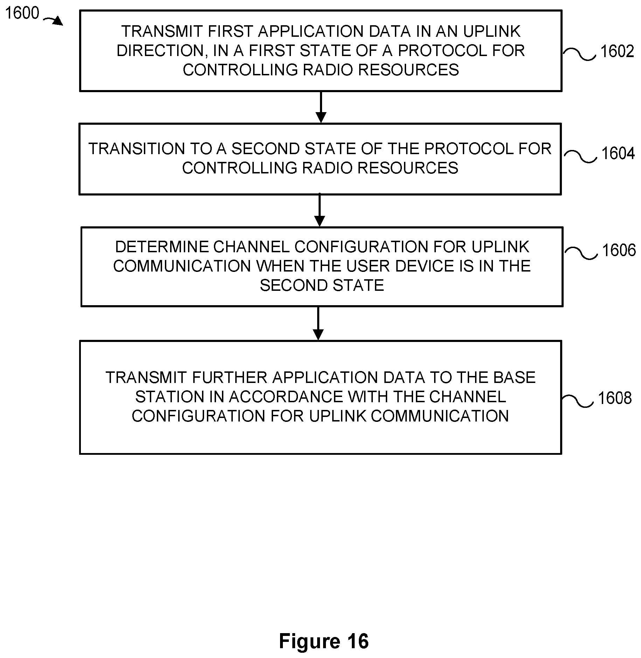

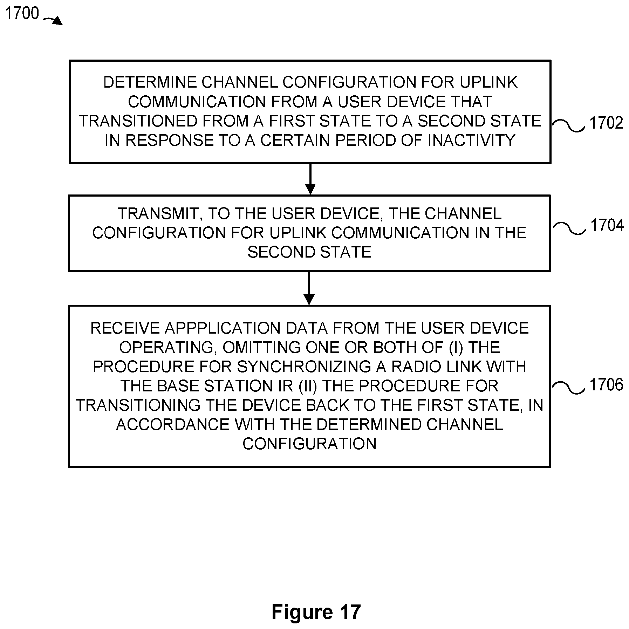

   Figs. 16 and 17 illustrate example methods that can be implemented in any suitable user device or a suitable base station, in particular:
      Fig. 16 is a flow diagram of an example method in a user device for reducing latency in uplink communication; and
      Fig. 17 is a flow diagram of an example method in a base station for reducing latency uplink communication.

### DETAILED DESCRIPTION OF THE DRAWINGS

As discussed in detail below, a user device and a base station of this disclosure implement certain techniques for reducing the latency in transmission of application data in the uplink direction, i.e., from the user device to the base station. These techniques allow the user device operating in the RRC_INACTIVE state in certain cases to omit a procedure for synchronizing a radio link between the user device and the base station, a procedure for resuming an RRC connection and transitioning to the RRC_ACTIVE state, or both, prior to resuming transmission of application data in the uplink direction. Although the examples below refer primarily to 5G NR base stations, components connected to 5G NR base stations, and the NR air interface, the techniques of this disclosure in general can apply to other types of networks in which a user device implements certain states of a protocol for controlling radio resources.

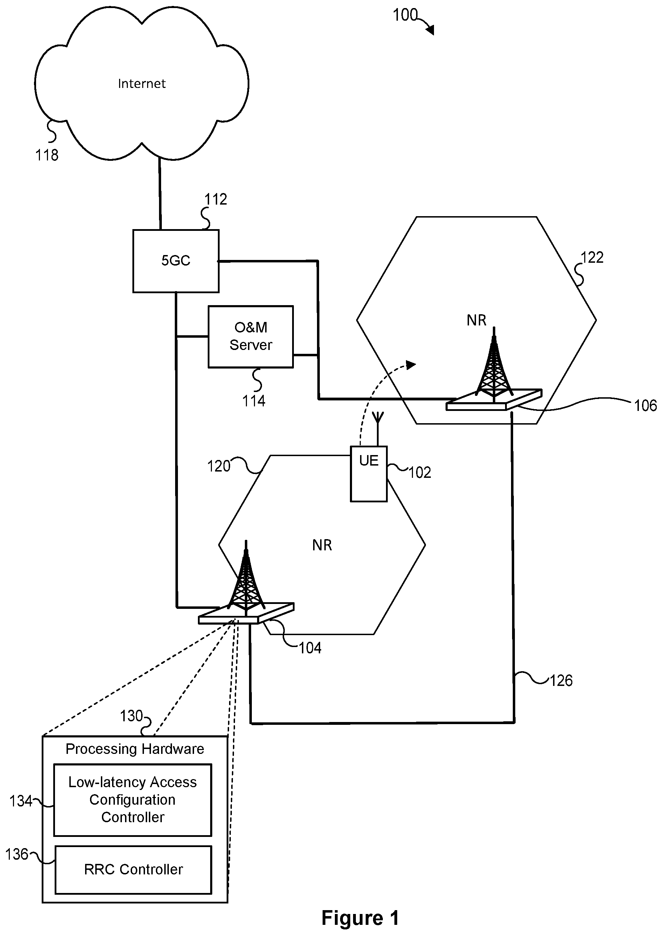

Referring to Fig. 1, a UE 102 can operate in a wireless communication network 100 that includes a first 5G NR base station 104 and a second 5G NR base station 106. Each of the base stations 104 and 106 can be implemented as a next-generation Node B (gNB). The base stations 104 and 106 can be connected to a 5G core network (5GC) 112 and an Operations and Maintenance (O&M) server 114, and the 5GC 112 can be connected to the Internet 118.

The base station 104 covers an NR cell 120, and the base station 106 covers an NR cell 122. The cells 120 and 122 can be in the same Radio Access Network Notification Areas (RNA) or different RNAs. In general, the wireless communication network 100 can include any number of base stations, and each of the base stations can cover one, two, three, or any other suitable number of cells. The UE 102 can support at least a 5G NR (or simply, "NR") air interface to communicate with the base stations 104 and 106. The base stations 104 and 106 also can be interconnected via an interface 126, which can be an Xn interface for interconnecting NG Radio Access Network (NG-RAN) nodes (i.e., gNBs).

The base station 104 is equipped with processing hardware 130 that can include one or more general-purpose processors (e.g., CPUs) and a non-transitory computer-readable memory storing instructions that the one or more general-purpose processors execute. Additionally or alternatively, the processing hardware 130 can include special-purpose processing units. The processing hardware130 in an example implementation includes a low-latency configuration controller 134 configured to determine, receive, transmit, etc. channel configuration for uplink transmission in accordance with which the UE 102 can transmit application data in the uplink direction, in some scenarios. The processing hardware further can include an RRC controller 136 to implement procedures and messaging at the RRC sublayer of the protocol communication stack. The base station 106 can include generally similar components.

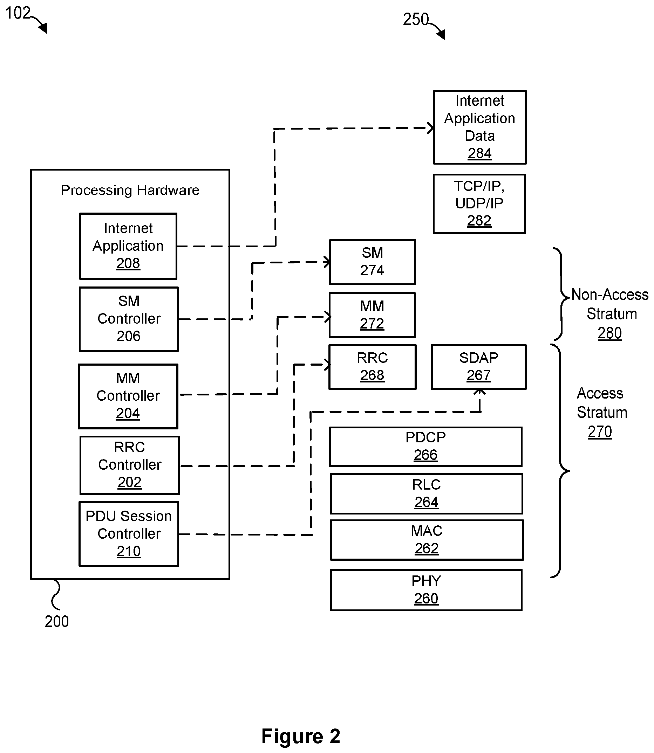

Next, Fig. 2 depicts various components of the UE 102. In particular, the UE 102 can be equipped with processing hardware 200 including one or more general-purpose processors (e.g., CPUs) and a non-transitory computer-readable memory storing instructions that the one or more general-purpose processors execute. Additionally or alternatively, the processing hardware 200 can include special-purpose processing units.

The processing hardware 200 can include an RRC controller 202, a mobility management (MM) controller 204, a session management (SM) controller 206, an Internet application 208, and a Protocol Data Unit (PDU) session controller 210. Each of the controllers 202, 204, and 206 is responsible for inbound messaging, outbound messaging, and internal procedures at the corresponding layer of a protocol stack 250. In addition to supporting messaging external to the UE 102, the controllers 202, 204, and 206 can exchange internal messages with each other as well as with other components of the UE 102, such as the application 208, for example. Each of the controllers 202, 204 206, 208 and 210 can be implemented using any suitable combination of hardware, software, and firmware. In one example implementation, the controllers 202, 204, 206, 208, and 210 are sets of instructions that define respective components of the operating system of the UE 102, and one or more CPUs execute these instructions to perform the corresponding functions. In another implementation, some or all of the controllers 202, 204, 206, 208 and 210 are implemented using firmware as a part of the wireless communication chipset.

The protocol stack 250 includes a physical layer 260 (commonly abbreviated as PHY), a medium access control (MAC) layer 262, a radio link control (RLC) layer 264, a packet data convergence protocol (PDCP) sublayer 266, a service data adaptation protocol (SDAP) sublayer 267, and the RRC sublayer 268 as part of the access stratum 270. These layers are ordered as illustrated in Fig. 2. The non-access stratum 280 of the protocol stack 250 includes, among other sub-layers, an MM sublayer 272 for exchanging messages related to registration/attachment and location updates, for example, and an SM sublayer 274 for exchanging messages related to PDU session establishment, PDU session modification, PDU session authentication and PDU session release, for example. The MM sublayer can correspond to a 5G MM (5GMM) sublayer for 5th generation system (5GS) NAS procedures. The protocol stack 250 also can support higher-layer protocols for various services and applications, including for example TCP/IP and UDP/IP layer 282 and a set 284 of protocols for communicating downlink and uplink application data. The controllers 202, 204, and 206 generate outbound messages and process inbound messages corresponding to the layers or sublayers 268, 272, and 274, respectively, as schematically illustrated in Fig. 2. The controllers 202, 204, 206 208, and 210 also carry out procedures internal to the UE 102.

After the SM controller 206 successfully establishes a PDU session, the PDU session controller 210 can transmit and receive application data packets over TCP/IP, UDP/IP, HTTP/TCP, etc. from various applications and services operating in the UE 102, including the application 208. For example, the Internet application 208 can be a web browser, a mailer application, a chat application, an audio player application, a video conferencing application, or any another type of an Internet application, and accordingly Internet application data at the layer 284 can include packets related to mailing services, social networks, audio and video streaming, Internet searches, online games, etc. Further, the PDU session controller 210 also can support any other type of application data such as Session Initiation Protocol (SIP) packets for IP Multimedia Subsystem (IMS) voice calls or IMS video calls, for example.

Next, several example scenarios that involve several components of Fig. 1 and related to reducing latency in uplink communication are discussed next with reference to Figs. 3-15.

Referring first to Fig. 3, the UE 102 in this example scenario initially operates 302 in the RRC_CONNECTED state, in the cell 120 of the gNB 104. In this state, the UE 102 transmits 312 application data in the uplink direction to the gNB 104, and receives 310 application data in the downlink direction from the gNB 104. The application data can include PDUs associated with the PDCP sublayer 266, for example (see Fig. 2).

After a certain period of application data inactivity, the gNB 104 can determine 320 that the UE 102 has been data-inactive. For example, the gNB 104 can make this determination if neither the gNB 104 nor the UE 102 has transmitted any application data in the downlink direction or the uplink direction, respectively, during a certain time interval. After the gNB 104 determines that UE 102 has been data-inactive, the gNB can optionally perform a procedure 322 (discussed below) and transmit 332 an *RRCRelease* message to the UE 102 to and instruct the UE 102 to transition to the RRC_INACTIVE state. In particular, the *RRCRelease* message can include a SuspendConfig IE that causes the UE 102 to transition to the RRC_INACTIVE (rather than RRC_IDLE) state. The UE 102 accordingly transitions 334 to the RRC_INACTIVE state upon receiving the *RRCRelease* message. The *RRCRelease* message includes channel configuration for uplink communication, which the UE 102 can use to transmit further application data.

Generally speaking, channel configuration for uplink communication for a certain cell can indicate what type of messages the base station of the cell can receive from the user device in the RRC_INACTIVE state and in some cases, include channel access data which the user device can use to transmit the data and/or the messages to the base station in the RRC_INACTIVE state. More particularly, the channel configuration for uplink communication can indicate whether the cell supports uplink transmission of application data (e.g., PDUs) when the user device is in the RRC_INACTIVE state: in other words, whether the base station of this cell requires that the UE 102 perform the procedure for transitioning to the RRC_CONNECTED state prior to transmitting further application data in the uplink direction (which can include exchanging messages with the base station to resume a radio connection) or supports omission of this procedure. Further, the channel configuration for uplink communication can enable and/or configure the user device to use uplink transmission of application data in the RRC_INACTIVE state. The channel configuration for uplink communication can indicate whether the base station requires that the user device perform a procedure for synchronizing the radio link between the user device and the base station in the RRC_INACTIVE state, or whether the user device can omit this procedure. In some cases, when the base station indicates that the user device can omit the procedure for synchronizing the radio link, the user device can use previously received channel access data, such as an uplink grant, to transmit application data or an RRC message to the base station. The channel configuration for uplink communication in some scenarios includes the channel access data.

The channel configuration for uplink communication, via which the gNB 104 can indicate to the UE 102 whether the cell 120 supports uplink transmission of application data in the RRC_INACTIVE state, can include a certain dedicated field with a certain value (e.g., "1") indicating support of this feature and another value (e.g., "0") indicating lack of support of this feature at the cell. As one alternative, the gNB 104 can include this field to indicate support of the feature and omit the field to indicate lack of support of the feature. Further, in some implementations the gNB 104 uses one field to indicate whether the cell supports omission of the random access procedure and another field to indicate whether the cell supports omission of the RRC Resume procedure, and in other implementations gNB 104 uses a single field to indicate support or lack of support of these features.

Further, the gNB 104 in some cases can provide channel configuration for uplink communication for a certain RNA rather than an individual cell. For example, the cells 120 and 122 can be in the same RNA, and the gNB 104 can indicate support of uplink transmission of application data in the RRC_INACTIVE state for the RNA, in channel configuration for uplink communication transmitted in an RRC message or a system information block as discussed in more detail below. The UE 102 can determine, based on this channel configuration for uplink communication, that the cell 120 supports uplink transmission of application data in the RRC_INACTIVE state. Further, when the UE 102 selects or reselects the cell 122, the UE 102 can determine that the cell 122 also supports uplink transmission of application data in the RRC_INACTIVE state, based on the previously received channel configuration for uplink communication.

In the example of Fig. 3 as well as the example of Fig. 6 discussed below, the gNB 104 provides the channel configuration for uplink communication via the *RRCRelease* message. However, in other scenarios the gNB 104 can provide the channel configuration for uplink communication via another RRC message, such as a *RRCReconfiguration* message (see Figs. 4 and 7), or the gNB 106 can provide channel configuration for uplink communication for cell 122 in a system information block for that cell (see Figs. 5, 8, and 9). In these scenarios, the gNB 104 may or may not include the channel configuration for uplink communication in the *RRCRelease* message. In some cases, the gNB 104 may include a part of the channel configuration for uplink communication in one of the *RRCRelease* message, the *RRCReconfiguration* message, or the system information block, and the rest of the channel configuration for communication in another one of the *RRCRelease* message, the *RRCReconfiguration* message, or the system information block.

In some implementations, the gNB 104 performs the optional procedure 322 to determine the capability of the UE 102 with respect to uplink communications in the RRC_INACTIVE state. For example, the gNB 104 can transmit 324 a *UECapabilityEnquiry* message to the UE 102 and specify "NR" as a parameter, and the UE 102 can transmit 326 a *UECapabilityEnquiry* message in response with a UE-NR-Capability information element (IE). This IE can include an indication of whether the UE 102 is configured to omit the RRC Resume procedure, and whether the UE 102 is configured to omit a procedure for synchronizing the radio link (e.g., a random access procedure), etc. The UE 102 can encode these indications as a single field or separate fields, depending on the implementation, and in any suitable format (e.g., using the NR RRC ASN.1 format). A UE-NR-Capability IE can signal support of the feature by including the corresponding field in the IE and accordingly signal lack of support of the feature by not including the corresponding field in the IE. In other implementations, certain values of these fields can signal support, while other values can signal lack of support. Further, the optional procedure 322 can include the gNB 104 sending a message including the UE-NR-Capability IE received from the UE 102, or another IE conveying this information, to the Access and Management Function (AMF) of the 5GC 112. It is noted that the gNB 104 alternatively can perform the optional procedure 322 at a different time, e.g., upon configuring or reconfiguring the RRC connection with the UE 102, prior to determining 320 that the UE 102 has been data-inactive.

Further, in other scenarios, the gNB 104 can receive an indication of which procedures the UE 102 supports in the RRC_INACTIVE state, which procedures the UE 102 can omit in the RRC_INACTIVE state, etc. from the AMF of the 5GC 112 in a Handover Request message or in an Initial Context Setup Request message. Still further, the gNB 104 can receive this indication from another gNB, such as the gNB 106, in a Handover Request message.

Thus, the gNB 104 can determine channel configuration for uplink communication for the UE 102 in view of the capability of the gNB 104/configuration of the cell 120 alone or in view of the capability of the gNB 104/configuration of the cell 120 as well as the capability of the UE 102, when the gNB 104 is aware of the capability of the UE 102.

In the example of Fig. 3, the channel configuration for uplink communication from the gNB 104 configures the UE 102 for uplink application data transmission in the RRC_INACTIVE state, but does not configure the UE 102 to skip the random access procedure. When the UE 102 initiates 340 application data transmission in the RRC_INACTIVE state (e.g., when the Internet application 208 determines that there is new application data to send to a host on the Internet 118), the UE 102 does so in accordance with the received channel configuration for uplink communication.

In particular, the UE 102 transmits 350 a random access preamble to the gNB 104, in the NR cell 120. The gNB 104 responds 352 with a Random Access Response including an uplink grant. The UE 102 then omits the RRC resume procedure and uses the received uplink grant to transmit 370 further application data to the gNB 104, while remaining in the RRC_INACTIVE state. The UE 102 also can receive application data the gNB 104 transmits in the downlink direction, in the RRC_INACTIVE state.

Next, Fig. 4 illustrates an example scenario in which the UE 102 receives channel configuration for uplink transmission in an *RRCReconfiguration* command. Similar to the scenario of Fig. 3, the UE 102 initially operates 302 in the RRC_CONNECTED state, in which the UE 102 transmits 412 application data in the uplink direction to and receives 410 application data the gNB 104 transmits in the downlink direction.

The gNB 104 determines channel configuration for uplink communication for the UE 102 based on the capability of the gNB 104 and, in some cases, the UE 102 (when, for example, the gNB 104 performs the optional procedure 322 discussed above or receives an indication of the NR capability of the UE 102 from the 5GC 112, the gNB 106, or another network entity). The gNB 104 transmits 414 an *RRCReconfiguration* including the channel configuration for uplink communication to the UE 102, which responds 416 with *RRCReconfigurationComplete.* In this example scenario, the gNB 106 configures the UE 104 to omit the RRC Resume procedure but not omit the random access procedure.

After the gNB 104 determines 420 that the UE 102 has been data-inactive, the gNB 104 transmits 432 an *RRCRelease* message which need not include channel configuration for uplink communication, unlike the *RRCRelease* message of Fig. 3. Next, similar to the scenario of Fig. 3, the UE 102 transitions 434 to the RRC_INACTIVE state upon receiving the *RRCRelease* message; initiates 440 application data transmission in the RRC_INACTIVE state; transmits 450 a random access preamble to the gNB 104 and receives 452 an uplink grant in a Random Access Response; and transmits 470 further application data to the gNB 104 while in the RRC_INACTIVE state.

Referring to Figs. 3 and 4, the UE 102 at a later time (i.e., subsequently to transmitting 370 or 470 the application data) can select or reselect a new cell. In this disclosure, "select" as applied to a cell can refer to selecting a cell in the first instance or reselecting a cell according to cell reselection criteria. For example, the UE 102 can select the cell 122 of the gNB 106.

According to one implementation, the UE 102 releases the channel configuration for uplink communication received from the gNB 104 upon selection/reselection. Thus, even though the gNB 104 configured the UE 102 to omit the RRC Resume procedure, the UE 102 performs both the random access procedure and the RRC Resume procedure after selecting the cell 122. More specifically, the UE 102 transmits a random access preamble to the gNB 106 in the newly selected cell, receives a random access response from the gNB 106 with an uplink grant, and transmits an *RRCResumeRequest* message to the gNB 106. After the gNB 106 responds with a *RRCResume* command, the UE 102 transitions to the RRC_CONNECTED state and transmits a *RRCResumeComplete* message to the gNB 106. The UE 102 then transmits application data to the gNB 106.

According to another implementation, however, the UE 102 retains the channel configuration for uplink communication when selecting a new cell. After selecting the cell 122, for example, the UE 102 performs only the random access procedure. More specifically, the UE 102 transmits a random access preamble to the gNB 106, receives a random access response from the gNB 106 with an uplink grant, and transmits application data to the gNB 106 using the uplink grant, without performing the RRC Resume procedure. The UE 102 can remain in the RRC_INACTIVE state.

As another example, the UE 102 operating in the RRC_INACTIVE state can receive a paging message including a core network identity (e.g., NG-5G-S-TMSI IE) of the UE 102 from a gNB (e.g., the gNB 104, the gNB 106, or another gNB) and in response transition from the RRC_INACTIVE state to the RRC_IDLE state (to respond to the paging message, the UE 102 subsequently initiates an RRC Setup procedure in order to transmit a NAS Service Request message to the gNB). The UE 102 can release the previously received channel configuration for uplink communication upon transitioning to the RRC_IDLE state or in response to the RRC Setup procedure. The UE 102 can release other previously received configurations upon transitioning to the RRC_IDLE state or in response to the RRC Setup procedure.

In the scenario of Fig. 5, the UE 102 receives channel configuration for uplink transmission in a system information block for a newly selected cell. At the beginning of this scenario, the UE 102 operates in the cell 120 and exchanges 518 application data with the gNB 104. The UE 102 then receives an *RRCRelease* message. The UE 102 transitions 534 to the RRC_INACTIVE state and then selects 536 a new 5G NR cell, in particular the cell 122 of the gNB 106.

The UE 102 receives 538, from the gNB 106, a *SystemInformationBlock* message that includes channel configuration for uplink transmission. The gNB 106 can determine the channel configuration for uplink transmission in view of the capability of the gNB 106 and, in some cases, the NR capability of the UE 102 (which the gNB 106 can receive from the 5GC 112 or the gNB 104, for example).

For clarity, Fig. 5 further illustrates two different instances in which the UE 102 transmits application data in the uplink direction, after the UE 102 initiates 540 data transmission while in the RRC_INACTIVE state. In the first instance, the gNB 106 configures the UE 102 to transmit uplink data while remaining in the RRC _ACTIVE state, and thus the UE 102 omits the RRC Resume procedure; in the second instance, the gNB 106 configures the UE 102 to not transmit uplink data when operating in the RRC _ACTIVE state, and thus the UE 102 performs the RRC Resume procedure. In both instances, the gNB 106 configures the UE 102 to not omit the random access procedure. Accordingly, the UE 102 in both instances first synchronizes the radio link and to this end transmits 550 a random access preamble and receives 552 a random access response. In one implementation, the UE 102 selects the random access preamble from among the multiple random access preambles configured in the *SystemInformationBlock* or another *SystemInformationBlock* broadcast by the gNB 106.

In the first instance, the UE 102 determines 554 that it need not perform the RRC Resume procedure and transmits 570 application data in the uplink direction. In one implementation, the UE 102 uses an uplink grant included in the random access response to transmit the 570 application data. In another implementation, the UE 102 uses the previously-received channel configuration for uplink transmission to transmit the 570 application data. In this implementation, the UE 102 may transmit 570 the application data before or after receiving the random access response. In the second instance, the UE 102 determines 556 that it must perform the RRC Resume procedure prior to transmitting uplink application data. The UE 102 accordingly transmits 560 an *RRCResumeRequest* message using an uplink grant included in the random access response, receives 562 an *RRCResume* command in response, transitions 564 to the RRC_CONNECTED state, and transmits 566 an *RRCResumeComplete* message in response to the *RRCResume* command. The UE 102 then transmits 590 application data to the gNB in the RRC_CONNECTED state. Because the *RRCResume* command resumes operation of a certain Data Radio Bearer (DRB), the UE 102 can transmit 590 the application data using the resumed DRB. At step 370, 470 or 570, the UE 102 can transmit the application data using control plane or user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104. In another example, the UE 102 can include the application data in an RRC message (e.g., an RRC Data Request message) or a NAS message (e.g., a NAS Data Transport message) and transmit the RRC message or the NAS message to the gNB 104.

Thus, the UE 102 in the scenarios of Figs. 3-5 omits the RRC Resume procedure, when the gNB 104 or 106 indicates support of uplink transmissions in the RRC_INACTIVE state, but performs the random access procedure. Figs. 6-9 next illustrate situations in which the UE 102 can omit the random access procedure as well as the RRC Resume procedure, or in some cases omit the random access procedure but perform the RRC Resume procedure.

Referring first to Fig. 6, the UE 102 initially operates 602 in the RRC_CONNECTED state, in the cell 120 of the gNB 104. Similar to the scenario of Fig. 3, the UE 102 transmits 612 and receives 610 application data, the gNB 104 at some point determines 620 that the UE 102 has been data-inactive and transmits 632 an *RRCRelease* message, and the UE 102 transitions 634 to the RRC_INACTIVE state. The *RRCRelease* message includes channel configuration for uplink communication. The gNB 104 and the UE 102 in some cases also can perform the optional procedure 322 discussed above. The channel configuration for uplink communication in this example includes NOMA configuration with an uplink grant.

In one example implementation, the NOMA configuration can include one or more Multiple Access (MA) signatures. A NOMA scheme may comprise one or more MA signatures, in which each MA signature can include a combination of channel coding, bit-level scrambling, bit-level interleaving, symbol-level spreading, symbol-level scrambling, symbol-level interleaving with no zero padding, power assignment, sparse resource element (RE) mapping, and multiplexing with a preamble and demodulation reference signal (DMRS). In another implementation, the NOMA configuration includes configuration resources in time and frequency domains in addition to the one or more MA signatures. For example, the NOMA configuration specifies location of OFDM symbols, slots or subframes and subcarriers, resource elements or resource blocks for the UE 102 to transmit data using a NOMA transmission scheme. However, according to another example implementation, the NOMA configuration does not include the resources in time and frequency domains. In this case, the gNB 104 can transmit a configured uplink grant to the UE 102 operating in the RRC_CONNECTED state on a PDCCH.

With one example type of NOMA configuration, the gNB 104 configures the UE 102 to omit the RRC Resume procedure as well as the channel access procedure. After the UE 102 transitions 634 to the RRC_INACTIVE state, the UE 102 initiates 640 transmission of application data in the uplink direction. The UE 102 determines 642 in this instance to omit both the random access procedure (or, more broadly, a procedure for synchronizing the radio link with the gNB 104) and the RRC Resume procedure, in accordance with the received NOMA configuration. The UE 102 accordingly transmits 644 application data to the gNB 104 using the uplink grant included in the NOMA configuration.

In another instance, the UE 102 determines 660 to omit the random access procedure (or, more broadly, a procedure for synchronizing the radio link with the gNB 104) but not the RRC Resume procedure, in accordance with the received NOMA configuration. The UE 102 accordingly transmits 662 an *RRCResumeRequest* message to the gNB 104 using the NOMA configuration, receives 664 an *RRCResume* command in response, transitions back 666 to the RRC_CONNECTED state, and transmits 668 an *RRCResumeComplete* message to the gNB 104, so as to notify the gNB 104 of the state transition. The UE 102 then transmits 670 application data to the gNB 104.

According to one example, the UE 102 transmits 662 the *RRCResumeRequest* message to the gNB 104 using the uplink grant included in the NOMA configuration. In another example, the UE 102 transmits 662 the *RRCResumeRequest* message using the uplink grant which the gNB 104 transmitted on the PDCCH. Similarly, the UE 102 can transmit 644 or 670 the application data using the uplink grant included in the NOMA configuration or the uplink grant received on the PDCCH. In the second instance, the UE 102 can use the DRB which the *RRCResume* command resumed to transmit 670 the application data. At step 644, the UE 102 can transmit the application data using control plane or user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104. In another example, the UE 102 can include the application data in an RRC message (e.g., an RRC Data Request message) or a NAS message (e.g., an NAS Data Transport message) and transmit the RRC message or the NAS message to the gNB 104. At step 670, the UE 102 transmits the application data using user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104.

The scenario of Fig. 7 is generally similar to that of Fig. 6, except that here the UE 102 receives channel configuration for uplink transmission, including NOMA configuration, in an *RRCReconfiguration* command. The *RRCRelease* accordingly need not include channel configuration for uplink transmission.

In particular, as illustrated in Fig. 7, the UE 102 initially operates 702 in the RRC_CONNECTED state; receives 710 and transmits 712 application data in the uplink direction and the downlink direction, respectively. The gNB 104 transmits 714 an *RRCReconfiguration* command with channel configuration for uplink transmission. In this example, the channel configuration for uplink transmission includes NOMA configuration, which in turn can include an uplink grant, similar to the channel configuration for uplink transmission the gNB 104 transmits 632 in the *RRCRelease* message in the case of Fig. 6. The UE 102 responds 716 with an *RRCConfigurationComplete* message. The gNB 104 at some point determines 720 that the UE 102 has been data-inactive and transmits 732 an *RRCRelease* message. Similar to the example of Fig. 6, the UE 102 transitions 734 to the RRC_INACTIVE state, initiates 740 transmission of application data in the uplink direction, omits 742 the RRC Resume along with the random access procedure and transmits application data 750 in the RRC_INACTIVE STATE in one instance, and omits 760 only the random access procedure but not the RRC Resume procedure in the other instance. In the latter instance, the UE 102 transmits 762 an *RRCResumeRequest* message, receives 764 an *RRCResume* command in response, transitions back 768 to the RRC_CONNECTED state, and transmits 766 an *RRCResumeComplete* message to the gNB 104 prior to transmitting 770 further application data to the gNB 104. Also similar to the scenario of Fig. 6, the UE 102 can use the uplink grant included in the NOMA configuration or the uplink grant received on the PDCCH to transmit the *RRCResumeRequest* message or application data. Further, the gNB 104 in some cases can perform the optional procedure 322 prior to *RRCReconfiguration* command, so that the gNB 104 can determine the channel configuration for uplink transmission in view of the NR capability of the UE 102. At step 750, the UE 102 can transmit the application data using control plane or user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104. In another example, the UE 102 can include the application data in an RRC message (e.g., an RRC Data Request message) or a NAS message (e.g., an NAS Data Transport message) and transmit the RRC message or the NAS message to the gNB 104. At step 770, the UE 102 transmits the application data using user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104.

Now referring to Fig. 8, the UE 102 in this example scenario receives channel configuration for uplink transmission in a system information block for the newly selected cell 122 of the gNB 106, similar to the scenario of Fig. 5, but in this case the gNB 106 provides the UE 102 with NOMA configuration that allows the UE 102 to omit the random access procedure (and, in some cases, also the RRC Resume procedure).

At the beginning of this scenario, the UE 102 exchanges 818 application data with the gNB 104 in the cell 120 and receives an *RRCRelease* message. The UE 102 transitions 834 to the RRC_INACTIVE state and then selects 836 the cell 122 of the gNB 106. The UE 102 then receives 838 a *SystemInformationBlock* message with channel configuration for uplink transmission, including NOMA configuration, from the gNB 106. The gNB 106 can determine the channel configuration for uplink transmission in view of the capability of the gNB 106 and, in some cases, the NR capability of the UE 102 (which the gNB 106 can receive from the 5GC 112 or the gNB 104, for example). The UE 102 subsequently initiates 840 data transmission in while in the RRC_INACTIVE state.

In the first instance, the UE 102 determines 854 that the gNB 106 supports, in the cell 122, application data transmission in the uplink direction in the RRC_INACTIVE state. The UE 102 further determines that the channel configuration for uplink transmission received in the *SystemInformationBlock* message configures the UE 102 to omit both the random access procedure and the RRC resume procedure. The UE 102 in the first instance transmits 870 application data to the gNB 106 using the NOMA configuration included in the *SystemInformationBlock* message.

In the second instance, the UE 102 determines 856, based on the channel configuration for uplink transmission received in the *SystemInformationBlock* message, that the UE 102 must perform the RRC Resume procedure prior to transmitting uplink application data, and also perform the random access procedure prior to transmitting the RRC Resume procedure. The UE 102 accordingly transmits 850 a random access preamble to the gNB 106, receives 852 a random access response from the gNB 106 with an uplink grant, transmits 860 an *RRCResumeRequest* message to gNB 106 using the received uplink grant, receives 862 an *RRCResume* command in response, transitions back 864 to the RRC_CONNECTED state, and transmits 866 an *RRCResumeComplete* message to the gNB 106. The UE 102 then transmits 890 application data to the gNB in the RRC_CONNECTED state. Because the *RRCResume* command resumes operation of a certain Data Radio Bearer (DRB), the UE 102 can transmit 890 the application data using the resumed DRB. At step 870, the UE 102 can transmit the application data using control plane or user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104. In another example, the UE 102 can include the application data in an RRC message(e.g., an RRC Data Request message) or a NAS message (e.g., an NAS Data Transport message) and transmit the RRC message or the NAS message to the gNB 104. At step 890, the UE 102 transmits the application data using user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104.

Next, Fig. 9 illustrates another example scenario in which the UE 102 receives channel configuration for uplink transmission, including NOMA configuration, in a system information block for the newly selected cell 122.

Similar to the scenario of Fig. 8, the UE 102 exchanges 918 application data with the gNB 104 in the cell 120, receives an *RRCRelease* message, transitions 934 to the RRC_INACTIVE state, and then selects 936 the cell 122 of the gNB 106. The UE 102 then receives 938 a *SystemInformationBlock* message with channel configuration for uplink transmission, including NOMA configuration, from the gNB 106. The gNB 106 can determine the channel configuration for uplink transmission in view of the capability of the gNB 106 and, in some cases, the NR capability of the UE 102 (which the gNB 106 can receive from the 5GC 112 or the gNB 104, for example). The UE 102 subsequently initiates 940 data transmission in the RRC_INACTIVE state.

In the first instance, the UE 102 determines 954 that the gNB 106 supports application data transmission in the uplink direction in the RRC_INACTIVE state, based on the received channel configuration for uplink transmission. The UE 102 further determines that the channel configuration for uplink transmission received in the *SystemInformationBlock* message configures the UE 102 to omit both the random access procedure but not the RRC resume procedure. The UE 102 in the first instance transmits 960 an *RRCResumeRequest* message using the uplink grant included in the received configuration, receives 962 the *RRCResume* command from the gNB 106, transitions back 964 to the RRC_CONNECTED state, and transmits 966 an *RRCResumeComplete* message to the gNB 106. The UE 102 then transmits 970 application data to the gNB 106.

In the second instance, the UE 102 determines 956 that the gNB 106 does not support application data transmission in the uplink direction in the RRC_INACTIVE state, based on the received channel configuration for uplink transmission. The UE 102 thus determines that it can omit neither the random access procedure nor the RRC Resume procedure. The UE 102 accordingly transmits 950 a random access preamble to the gNB 106, receives 952 a random access response from the gNB 106 with an uplink grant, transmits 980 an *RRCResumeRequest* message to gNB 106 using the received uplink grant, receives 982 an *RRCResume* command in response, transitions back 984 to the RRC_CONNECTED state, and transmits 966 an *RRCResumeComplete* message to the gNB 106. The UE 102 then transmits 990 application data to the gNB in the RRC_CONNECTED state. Because the *RRCResume* command resumes operation of a certain Data Radio Bearer (DRB), the UE 102 can transmit 990 the application data using the resumed DRB. At step 970 or 990, the UE 102 transmits the application data using user plane protocols. In one example, the UE 102 can include the application data in a MAC PDU, RLC PDU, PDCP PDU or in a SDAP PDU and transmit the MAC PDU, RLC PDU, the PDCP PDU or the SDAP PDU to the gNB 104.

Referring generally to Figs. 3-9, after transitioning 334, 434, 534, 634, 734, 834, 934 to the RRC_INACTIVE state, the UE 102 in some cases can transition from the RRC_INACTIVE state to the RRC_IDLE state or to the RRC_CONNECTED state, before the UE 102 initiates 340, 440, 540, 640, 740, 840, 940 transmission of application data in the uplink direction. The UE 102 can release the previously received channel configuration for uplink communication upon transitioning to the RRC_IDLE state or the RRC_CONNECTED state, or in some scenarios the UE 102 retains the configuration for subsequent use in transmitting messages or application data in the RRC_CONNECTED state or the RRC_INACTIVE state.

For example, the UE 102 operating in the RRC_INACTIVE state can receive a paging message including a Radio Network Temporary Identifier (RNTI) value (e.g. an I-RNTI-Value IE) of the UE 102 from a gNB (e.g., the gNB 104, the gNB 106, or another gNB), and in response initiate the procedure for transitioning to the RRC_CONNECTED state by transmitting an *RRCResumeRequest* message to the gNB. In one implementation, the UE 102 releases the previously received channel configuration for uplink communication in response to the paging message or the procedure. In another implementation, the UE 102 uses the previously-received configuration for uplink communication, e.g., NOMA configuration, to transmit the *RRCResumeRequest* message. In both implementations, the UE 102 receives an *RRCResume* message from the gNB in response to the *RRCResumeRequest* message and transmits or receives application data on a data radio bearer (DRB) configured in a previously received radio bearer configuration. The UE 102 transitions to the RRC_CONNECTED state in response to the *RRCResume* message.

Next, Figs. 10-13 illustrate several example scenarios in which multiple base stations share channel configuration for uplink communication for a certain UE. Generally speaking, these techniques allow a UE to obtain channel access data, such as NOMA configuration and/or a configured uplink grant (or simply "configured grant"), in a cell of one base station and transmit application data uplink in a cell of another base station.

Referring first to Fig. 10, the gNBs 104 and 106 can operate in the same RNA. The gNB 104 can store 1002 a configured grant/NOMA configuration, and gNB 106 can store 1004 the same configured grant/NOMA configuration. In one implementation, the gNB 104 and 106 pre-store this data for use by UEs operating in the cells 120 and 122. The gNB 104 transmits 1010 the configured grant/NOMA configuration to the UE 102 using an RRC message or system block information as discussed above in connection with FIGs. 3-9. The UE 102 then uses 1012 the configured grant/NOMA configuration to communicate with the gNB 104 and/or the gNB 106. As discussed above per Figs. 3-9, the procedures 1012 can include uplink transmission of application data, and can involve omitting a procedure for synchronizing the radio link the base station, omitting a procedure for resuming the radio connection, or omitting both procedures.

Fig. 11 illustrates a scenario in which the gNB 104 receives 1106 a configured grant/NOMA configuration from the 5GC 112 or the O&M server 114 or other network entity, and the gNB 106 receives 1108 the same configured grant/NOMA configuration from the 5GC 112 or the O&M server 114 or other network entity. The gNB 104 then transmits 1110 the configured grant/NOMA configuration to the UE 102 as discussed above in connection with Figs. 3-9. The UE 102 then uses 1112 the configured grant/NOMA configuration to communicate with the gNB 104 and/or the gNB 106. The procedures 1112 can be similar to the procedures 1012 discussed above.

Now referring to Fig. 12, the gNB 104 in this example scenario generates configured grant/NOMA configuration and transmits 1202 the configured grant/NOMA configuration to the UE 102 as discussed above in connection with Figs. 3-9. The gNB 104 also transmits 1204 the configured grant/NOMA configuration to the gNB 106. The gNB 104 can transmit 1204 this information via the Xn interface 126 (see Fig. 1). The UE 102 then uses 1212 the configured grant/NOMA configuration to communicate with the gNB 104 and/or the gNB 106, where the procedures 1212 are similar to the procedures 1012, 1112 discussed above.

Fig. 13 illustrates a scenario in which the gNB 104 generates configured grant/NOMA configuration and transmits 1306 the configured grant/NOMA configuration to the 5GC 112 or the O&M server 114. The 5GC 112 or the O&M server 114 in turn transmits 1308 the configured grant/NOMA configuration to the gNB 106. Meanwhile, the gNB 104 also transmits 1310 the configured grant/NOMA configuration to the UE 102 as discussed above in connection with Figs. 3-9. Similar to the examples above, the UE 102 then uses 1312 the received configured grant/NOMA configuration to communicate with the gNB 104 and/or the gNB 106, where the procedures 1312 are similar to the procedures 1012, 1112, and 1212 discussed above.

Next, Fig. 14 illustrates an example method 1400 for determining and applying channel configuration for uplink communication, which can be implemented in the UE 102, for example. The method 1400 begins at block 1402, where the UE 102 transmits application data in the RRC_CONNECTED state (e.g., message 312 of Fig. 3, message 412 of Fig. 4, message 612 of Fig. 6, message 712 of Fig. 7). At block 1404, the UE 102 in some cases receives an *RRCReconfiguration* message with channel configuration for uplink communication (see, e.g., message 414 of Fig. 4, message 714 of Fig. 7).

Next, at block 1406, the UE 102 receives the *RRCRelease* message. In some cases, the *RRCRelease* message includes channel configuration for uplink communication (e.g., message 332 of Fig. 2, message 632 of Fig. 6), while in other cases, including those in which the UE 102 already received channel configuration for uplink communication in the *RRCReconfiguration* message, the *RRCRelease* message does not include channel configuration for uplink communication (e.g., message 432 of Fig. 4, message 732 of Fig 7). In either case, the UE 102 can transition to the RRC_INACTIVE state in response to the *RRCRelease* message, at block 1406.

At block 1408, the UE 102 obtains channel configuration for uplink communication from the *RRCReconfiguration* message or the *RRCRelease* message. The UE 102 determines, based on the received channel configuration, whether the UE 102 can omit the procedure for synchronizing the radio link with the base station, such as the random access procedure (block 1410). If the UE 102 cannot omit the random access procedure, the flow proceeds to block 1412, where the UE 102 transmits a random access preamble and receives a random access response (messages 350 and 352 of Fig. 3, messages 450 and 452 of Fig. 4). Otherwise, if the UE 102 can omit the random access procedure, the flow proceeds to block 1414.

At block 1414, the UE 102 determines, based on the received channel configuration, whether the UE 102 can omit the RRC resume procedure. If the UE 102 cannot omit the RRC resume procedure, the flow proceeds to block 1416, where the UE 102 transmits an *RRCResumeRequest* message to the base station and receives an *RRCResume* command in response (e.g., messages 662 and 664 of Fig. 6, messages 762 and 764 of Fig. 7). If the UE 102 omitted block 1412, the UE 102 can transmit the *RRCResumeRequest* message using channel access data received as a part of the channel configuration for uplink transmission. The UE 102 transitions back to the RRC_CONNECTED state at block 1418. Otherwise, the UE 102 can omit the RRC resume procedure, and the flow proceeds directly to block 1420.

At block 1420, the UE 102 transmits further application data in the uplink direction (e.g., message 370 of Fig. 3, message 470 of Fig. 4, messages 644 and 670 of Fig. 6, messages 750 and 770 of Fig. 7). If the UE 102 omitted block 1412, the UE 102 can transmit the further application data using channel access data received as a part of the channel configuration for uplink transmission. If the UE omitted blocks 1416 and 1418, the UE 102 can transmit the further application data in the RRC_INACTIVE state.

Fig. 15 illustrates an example method 1500 for receiving channel configuration for uplink communication from one base station and applying this data for another base station, which also can be implemented in the UE 102.

The method 1500 begins at block 1502, where the UE 102 transmits application data, in the RRC_CONNECTED state, to a first 5G NR base station, such as the gNB 104 (e.g., message 518 of Fig. 5, message 818 of Fig. 8, message 918 of Fig. 9). Next, at block 1504, the UE 102 receives an *RRCRelease* message (e.g., message 518 of Fig. 5, message 818 of Fig. 8, message 918 of Fig. 9) and transitions to the RRC_INACTIVE state in response (block 534 of Fig. 5, block 834 of Fig. 8, block 934 of Fig. 9).

At block 1506, the UE 102 selects a cell of another 5G NR base station, such as the gNB 106 (e.g., block 536 of Fig. 5, block 836 of Fig. 8, block 936 of Fig. 9). As previously mentioned, "select" in these scenarios includes both the selection and reselection procedures. At block 1508, the UE 102 can receive a system information block element with channel configuration for uplink communication for the newly selected cell (e.g., block 538 of Fig. 5, block 838 of Fig. 8, block 938 of Fig. 9).

The UE 102 then determines at block 1510, based on the channel configuration received in system information block, whether the UE 102 can omit the procedure for synchronizing the radio link with the base station, such as the random access procedure. If the UE 102 cannot omit the random access procedure, the flow proceeds to block 1512, where the UE 102 transmits a random access preamble to the base station of the newly selected cell and receives a random access response (e.g., messages 550 and 552 of Fig. 5, messages 854 and 856 of Fig. 8, messages 954 and 956 of Fig. 9). Otherwise, if the UE 102 can omit the random access procedure, the flow proceeds to block 1514.

At block 1514, the UE 102 determines, based on the channel configuration received in the system information block, whether the UE 102 can omit the RRC resume procedure. If the UE 102 cannot omit the RRC resume procedure, the flow proceeds to block 1516, where the UE 102 transmits an *RRCResumeRequest* message to the base station of the newly selected cell and receives an *RRCResume* command in response (e.g., messages 560, 562 of Fig. 5, messages 860 and 862 of Fig. 8, messages 960/962 and 980/982 of Fig. 9). If the UE 102 omitted block 1512, the UE 102 can transmit the *RRCResumeRequest* message using channel access data received as a part of the channel configuration for uplink transmission. The UE 102 transitions back to the RRC_CONNECTED state at block 1518. Otherwise, the UE 102 can omit the RRC resume procedure, and the flow proceeds directly to block 1520.

At block 1520, the UE 102 transmits further application data in the uplink direction (e.g., message 570 or 590 of Fig. 5, message 850 or 870 of Fig. 8, message 950 or 970 of Fig. 9). If the UE 102 omitted block 1512, the UE 102 can transmit the further application data using channel access data received as a part of the channel configuration for uplink transmission. If the UE omitted blocks 1516 and 1518, the UE 102 can transmit the further application data in the RRC_INACTIVE state.

For further clarity, Fig. 16 illustrates an example method 1600 for reducing latency in uplink communication which can be implemented in any suitable user device. The method 1600 begins at block 1602, where the user device transmits first application data in an uplink direction, in a certain state of a protocol for controlling radio resources (e.g., the RRC_CONNECTED state of the RRC protocol). Examples of block 1602 include blocks 1402 and 1502 discussed above with reference to Figs. 14 and 15, respectively.

At block 1604, the user device can transition to a second state of the protocol for controlling radio resources (e.g., the RRC_INACTIVE state of the RRC protocol). Examples of block 1604 include blocks 1404 and 1504 discussed above with reference to Figs. 14 and 15, respectively.

At block 1606, the user device can determine channel configuration for uplink communication when the user device is in the second state. For example, the user device can determine whether it can omit the procedure for synchronizing the radio link with the first base station to which the user device transmitted the first application data or to the second radio base station which the user device selected or reselected after transmitting the first application data in the uplink direction (e.g., block 1410 of Fig. 14, block 1510 of Fig. 15); and whether it can omit the procedure for resuming the radio link with the first base station to which the user device transmitted the first application data or with the second radio base station which the user device selected or reselected after transmitting the first application data in the uplink direction (e.g., block 1414 of Fig. 14, block 1514 of Fig. 15). Further, when the user device determines that it can omit the procedure for synchronizing the radio link, such as the random access procedure, the user device in some cases obtains channel access data (e.g., NOMA configuration, an uplink grant received on PDCCH) which the user device can use to perform the procedure for resuming the radio link or transmit application data in the uplink direction. At block 1608, the user device transmits further application data to the first base station (e.g., block 1420 of Fig. 14) or the second base station (e.g., block 1520 of Fig. 15) while still in the second state.

Finally, Fig. 17 illustrates an example method 1700 for reducing latency in uplink communication which can be implemented in any suitable base station.

The method 1700 begins at block 1702, where the base station determines channel configuration for uplink communication from a user device that has transitioned or will transition from a first state, in which the user device transmitted application data to the base station, to a second state in response to a certain period of application data inactivity. As discussed above, the base station can determine the channel configuration for uplink communication based on whether the base station supports omitting the procedure for synchronizing the radio link and whether the base station supports omitting the procedure for resuming the radio connection. In some cases, the base station can determine the channel configuration for uplink communication further in view of the capability of the user device as previously described with reference to Fig. 3 element 322.

At block 1704, the base station can transmit the determined channel configuration for uplink communication to the user device. See Fig. 3 element 332, Fig. 4 element 414, Fig. 5 element 538, Fig. 6 element 632, Fig. 7 element 714, Fig. 8 element 838, Fig. 9 element 938, Fig. 10 element 1010, Fig. 11 element 1110, Fig. 12 element 1202, and Fig. 13 element 1310 as well as compare with Fig. 14 element 1408 and Fig. 15 element 1508. Next, at block 1706, the base station can receive application data and/or a message of the procedure for resuming the radio connection. See Fig. 3 element 370, Fig. 4 element 470, Fig. 5 elements 570, 560, 590, Fig. 6 elements 644, 662, 670, Fig. 7 elements 750, 762, 770, Fig. 8 elements 870, 860, 890, Fig. 9 elements 970, 980, 990 as well as compare with Fig. 14 element 1420 and Fig. 15 element 1520. Depending on the channel configuration for uplink communication provided to the user device and the configuration of the user device, the base station can omit the procedure for synchronizing the radio link (e.g., the random access procedure) and/or the procedure for resuming the radio connection (e.g., the RRC resume procedure).

The following additional considerations apply to the foregoing discussion.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for reducing latency in uplink communication through the disclosed principles herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the spirit and scope defined in the appended claims.

The following lists of aspects and clauses reflect a variety of the embodiments explicitly contemplated by the present disclosure.

Aspect 1. A method in a user device for uplink communication includes transmitting, by processing hardware of the user device, first application data in an uplink direction, while the UE is in a connected state associated with a protocol for controlling radio resources. The method further includes transitioning, by the processing hardware in response to a certain period of application data inactivity, to an inactive state associated with the protocol; determining, by the processing hardware, a channel configuration for uplink communication when the user device is in the inactive state; and transmitting, by the processing hardware, further application data in the uplink direction to a base station in accordance with the determined channel configuration.

Aspect 2. The method of aspect 1, where transmitting further application data occurs prior to transmitting a request to transition to the connected state and subsequently to receiving a random access response.

Aspect 3. The method of aspect 1, where transmitting the further application data occurs when the user device is in the inactive state.

Aspect 4. The method of aspect 1, where transmitting the further application data in the second state includes performing a procedure for synchronizing the radio link between the user device and the base station.

Aspect 5. The method of aspect 4, where performing the procedure for synchronizing the radio link includes transmitting a random access preamble to the base station and receiving a random access response from the base station.

Aspect 6. The method of aspect 4, where determining the channel configuration includes receiving, in a downlink direction, channel access data associated with synchronizing a radio link with the base station, prior to transitioning to the inactive state; and where transmitting the further application data includes using the received channel access data.

Aspect 7. The method of aspect 1, where determining the channel configuration includes: receiving, in a downlink direction, channel access data related to synchronizing a radio link with the base station, prior to transitioning to the second state; the method further comprising, prior to transmitting the further application data: transmitting, to the base station using the received channel access data, a request to resume a radio connection, receiving, by the processing hardware in response to the transmitted request, a command to resume the radio connection, and transitioning to the first state in response to the received command.

Aspect 8. The method of aspect 6 or 7, where receiving the channel access data includes receiving Non-Orthogonal Multiple Access (NOMA) configuration.

Aspect 9. The method of aspect 6 or 7, where receiving the channel access data includes receiving an uplink grant on a physical downlink control channel (PDCCH).

Aspect 10. The method of aspect 1, where the base station is a second base station, and wherein receiving the channel access data includes receiving the channel access data from a first base station distinct from the second base station.

Aspect 11. The method of any of the preceding aspects, further comprising: receiving, by the processing hardware in a downlink direction, a command to release a radio connection, the command including an indication of the channel configuration for uplink communication when the user device is in the second state.

Aspect 12. The method of any of aspects 1-10, further comprising: receiving, by the processing hardware in a downlink direction, a command to reconfigure a radio connection, the command including an indication of the channel configuration for uplink communication when the user device is in the second state.

Aspect 13. The method of any of the aspects 1-10, where the base station is a second base station, the method further comprising: selecting a cell of the second base station subsequently to transmitting the first application data in the uplink direction to a first base station; and receiving, from the second base station, a system information block including an indication of the channel configuration for uplink communication when the user device is in the second state.

Aspect 14. The method of any of the preceding aspects, further comprising: transmitting, by the processing hardware in the uplink direction, an indication of how the user device is configured for the uplink communication when the user device is in the inactive state.

Aspect 15. The method of any of the preceding aspects, where transitioning to the second state is in response to a message received in a downlink direction.

Aspect 16. A non-transitory medium storing thereon instructions that, when executed by processing hardware of a user device, cause the user device to perform a method according to any of the preceding aspects.

Aspect 17. A method in a base station for reducing latency in uplink communication, the method comprising: determining, by processing hardware of a base station, channel configuration for uplink communication for a user device that has transitioned from a first state, in which the user device transmitted first application data to the base station, to a second state in response to a certain period of application data inactivity, the first state and second states associated with a protocol for controlling radio resources; transmitting, by the processing hardware to the user device, the channel configuration for uplink communication from the user device; and receiving, by the processing hardware, further application data transmitted from the user device in accordance with the channel configuration.

Aspect 18. The method of aspect 17, where the transmitting the channel configuration includes transmitting, by the processing hardware, Non-Orthogonal Multiple Access (NOMA) configuration to the user device, and where the receiving the further application data includes: receiving the further application data from the user device according to the NOMA configuration.

Aspect 19. The method of aspect 18, further comprising: receiving, by the processing hardware, the NOMA configuration from one of a core network (CN) or an operation and maintenance (O&M) server.

Aspect 20. The method of aspect 19, further comprising: storing the NOMA configuration for the user device as a part of a configuration of the base station.

Aspect 21. The method of aspect 19, where the base station is a first base station, the method further comprising: transmitting, by the processing hardware, the NOMA configuration to a second base station operating in a same radio access network (RAN)-based notification area (RNA) as the first base station.

Aspect 22. The method of aspect 19, further comprising: transmitting, by the processing hardware, the NOMA configuration to one of a core network (CN) or an operation and maintenance (O&M) server.

Aspect 23. The method aspect 18, wherein transmitting the channel configuration includes transmitting, to the user device, uplink grant on a PDCCH.

Aspect 24. The method of aspect 17, wherein receiving the further application data includes: performing a procedure for synchronizing the radio link between the user device and the base station but omitting a procedure for transitioning the user device to the first state.

Aspect 25. The method of aspect 24, wherein performing the procedure for synchronizing the radio link includes: receiving a random access preamble from the user device, and transmitting a random access response to the user device.

Aspect 26. The method of aspect 12, wherein receiving the further application data includes: omitting both a procedure for synchronizing the radio link between the user device and the base station and a procedure for transitioning the user device to the first state.

Aspect 27. The method of aspect 12, wherein receiving the further application data includes: omitting a procedure for synchronizing the radio link between the user device and the base station but performing a procedure for transitioning the user device to the first state.

Aspect 28. The method of any of aspects 17-27, further comprising: transmitting, to the user device, a command to release a radio connection, the command including an indication that the base station supports uplink transmissions in the second state.

Aspect 29. The method of any of aspects 17-27, further comprising: transmitting, to the user device, a command to reconfigure a radio connection, the command including an indication that the base station supports uplink data transmissions in the second state.

Aspect 30. The method of any of aspects 17-27, further comprising: transmitting, to the user device, a system information block including an indication that the base station supports uplink data transmissions in the second state.

Aspect 31. A non-transitory medium storing thereon instructions that, when executed by processing hardware of a base station, cause the base station to perform a method according to any of the aspects 17-30.

Further embodiments of the disclosure are enumerated in the following numbered clauses.

Clause 1. A method in a user device for uplink communication, the method comprising:
transmitting, by processing hardware of the user device, first application data in an uplink direction, while the UE is in a connected state associated with a protocol for controlling radio resources;
transitioning, by the processing hardware in response to a certain period of application data inactivity, to an inactive state associated with the protocol;
determining, by the processing hardware, a channel configuration for uplink communication when the user device is in the inactive state;
completing a procedure for synchronizing a radio link between the user device and the base station; and
transmitting, by the processing hardware, further application data in the uplink direction to a base station in accordance with the determined channel configuration when the user device is in the inactive state, prior to transmitting a request to transition to the connected state.

Clause 2. The method of clause 1, wherein completing the procedure for synchronizing the radio link between the user device and the base station includes receiving a random access response in response to transmitting a random access preamble to the base station,

Clause 3. The method of clause 1, wherein determining the channel configuration includes:
receiving, in a downlink direction, channel access data associated with synchronizing the radio link with the base station, prior to transitioning to the inactive state.

Clause 4. The method of clause 3, wherein transmitting the request to transition to the connected state includes transmitting, to the base station using the received channel access data, a request to resume a radio connection,

Clause 5. The method of clause 3, wherein the base station is a second base station, and wherein receiving the channel access data includes:
receiving the channel access data from a first base station distinct from the second base station.

Clause 6. The method of any of the preceding clauses, further comprising:
receiving, by the processing hardware in a downlink direction, a command to release a radio connection, the command including an indication of the channel configuration for uplink communication when the user device is in the inactive state.

Clause 7. The method of any of the clauses 1-5, further comprising:
receiving, by the processing hardware in a downlink direction, a command to reconfigure a radio connection, the command including an indication of the channel configuration for uplink communication when the user device is in the inactive state.

Clause 8. The method of any of the clauses 1-5, wherein the base station is a second base station, the method further comprising:
selecting a cell of the second base station subsequently to transmitting the first application data in the uplink direction to a first base station; and
receiving, from the second base station, a system information block including an indication of the channel configuration for uplink communication when the user device is in the inactive state.

Clause 9. The method of any of the preceding clauses, further comprising:
transmitting, by the processing hardware in the uplink direction, an indication of how the user device is configured for the uplink communication when the user device is in the inactive state.

Clause 10. The method of any of the preceding clauses, wherein the transmitting the further application data includes:
transmitting packet data convergence protocol (PDCP) data units.

Clause 11. A non-transitory medium storing thereon instructions that, when executed by processing hardware of a user device, cause the user device to perform a method according to any of the preceding clauses.

Clause 12. A method in a base station for reducing latency in uplink communication, the method comprising:
determining, by processing hardware of a base station, channel configuration for uplink communication for a user device that has transitioned from a connected state, in which the user device transmitted first application data to the base station, to an inactive state in response to a certain period of application data inactivity, the connected and active states associated with a protocol for controlling radio resources;
transmitting, by the processing hardware to the user device, the channel configuration for uplink communication from the user device; and
receiving, by the processing hardware, further application data transmitted from the user device in accordance with the channel configuration.

Clause 13. The method of clause 12, wherein the transmitting the channel configuration includes:
transmitting, by the processing hardware, Non-Orthogonal Multiple Access (NOMA) configuration to the user device, and
wherein the receiving the further application data includes:
   receiving the further application data from the user device according to the NOMA configuration.

Clause 14. The method of clause 13, wherein the base station is a first base station, the further comprising:
transmitting, by the processing hardware, the NOMA configuration to a second base station operating in a same radio access network (RAN)-based notification area (RNA) as the first base station.

Clause 15. The method of clause 12, wherein receiving the further application data includes:
performing a procedure for synchronizing the radio link between the user device and the base station but omitting a procedure for transitioning the user device to the connected state.

Clause 16. The method of clause 12, wherein receiving the further application data includes:
omitting at least one of (i) a procedure for synchronizing the radio link between the user device and the base station and (ii) a procedure for transitioning the user device to the connected state.

Clause 17. The method of any of the clauses 12-12, further comprising:
transmitting, to the user device, a command to release a radio connection, the command including an indication that the base station supports uplink data transmissions in the inactive state.

Clause 18. The method of any of the clauses 12-16, further comprising:
transmitting, to the user device, a command to reconfigure a radio connection, the command including an indication that the base station supports uplink data transmissions in the inactive state.

Clause 19. The method of any of the clauses 12-16, further comprising:
transmitting, to the user device, a system information block including an indication that the base station supports uplink data transmissions in the inactive state.

Clause 20. A non-transitory medium storing thereon instructions that, when executed by processing hardware of a base station, cause the base station to perform a method according to any of the clauses 12-19.

## Claims

1. A method in a radio access network (RAN) for reducing latency in uplink communication, the method comprising:
transmitting, by processing hardware, an indication that at least one base station operating in the RAN supports uplink data transmission from a UE when a radio connection between the UE and the base station is not active;
transmitting, to the UE and when the radio connection is active, channel access data for uplink transmission; and
receiving, by the processing hardware and when the radio connection is not active, application data or a control message in an uplink direction, using the channel access data.

2. The method of claim 1, wherein transmitting the indication includes one of:
broadcasting, in a cell covered by the at least one base station, a system information block including the indication,
transmitting, to the UE, an *RRCRelease* message including the indication, or
transmitting, to the UE, a message including channel configuration, the channel configuration including (i) the indication and (ii) the channel access data.

3. The method of claim 1 or 2, further comprising:
receiving, by the processing hardware from the UE, an indication of whether the UE supports uplink data transmission when the radio connection is not active.

4. The method of any of claims 1-3, including:
transmitting the channel access by a certain base station operating in the RAN; and
receiving the application data or the control message at the same base station operating in the RAN.

5. A method in a user equipment (UE) for uplink communication, the method comprising:
receiving, by processing hardware, an indication that a base station supports uplink data transmission from the UE when a radio connection between the UE and the base station is not active;
receiving, by the processing hardware and when the radio connection is active, channel access data for uplink transmission; and
transmitting, by the processing hardware and when the radio connection is not active, application data or a control message in an uplink direction, using the channel access data.

6. The method of claim 5, wherein receiving the indication includes:
receiving, from a radio access network (RAN) in which the base station operates, a system information block including the indication.

7. The method of claim 5, wherein receiving the indication includes:
receiving, from a RAN, an *RRCRelease* message including the indication.

8. The method of claim 5, including:
receiving, from a RAN, a message including channel configuration, the channel configuration including (i) the indication and (ii) the channel access data.

9. The method of any of claims 5-8, further comprising:
determining, based on the indication, that the UE should omit a procedure for resuming the radio connection with a RAN in order to transmit the application data or the control message.

10. The method of any of claims 5-9,
wherein the transmitting occurs in a first instance;
the method further comprising, in a second instance:
determining, based on the indication, that the UE must perform a procedure for resuming the radio connection to transmit the application data,
transmitting, to the RAN and when the radio connection is not active, a request to resume the radio connection, and
transmitting the application data to the RAN after resuming the radio connection.

11. The method of any of claims 5-10, further comprising:
transmitting, by the processing hardware to the RAN, an indication of whether the UE supports uplink data transmission when the radio connection is not active.

12. The method of any of claims 5-8, 10, or 11, including:
determining, based on the indication, that (i) the UE should not omit a procedure for resuming the radio connection to transmit the application data, and (ii) the UE should omit the procedure to transmit the control message; and
transmitting the control message in the uplink direction using the channel access data.

13. The method of any of claims 5-12, further comprising:
releasing, by the processing hardware, the channel access data in response to selecting or reselecting a cell.

14. The method of any of claims 5-13, wherein the channel access data includes a configured uplink grant.

15. An apparatus comprising processing hardware and configured to implement a method of any of the preceding claims.
